Europäisches Patentamt

(19) European Patent Office

Office européen des brevets

(11) Publication number: **0 029 537**
A1

# (12) EUROPEAN PATENT APPLICATION

(21) Application number: 80106872.7

(22) Date of filing: 07.11.80

(51) Int. Cl.³: **G 01 N 21/53**
**G 01 N 15/06**

(30) Priority: 14.11.79 US 94140

(43) Date of publication of application:
03.06.81 Bulletin 81/22

(84) Designated Contracting States:
AT BE CH DE FR GB IT LI NL SE

(71) Applicant: **CARRIER CORPORATION**
Carrier Tower P.O. Box 4800
Syracuse New York(US)

(72) Inventor: **Geary, Carl H.**
622 Westland Drive
Greenburg Pennsylvania(US)

(74) Representative: **Baillie, Iain Cameron et al,**
c/o Ladas & Parry Blumenstrasse 48
D-8000 München 2(DE)

(54) Monitoring entrained particulate matter in a gas stream.

(57) Entrainment of particulate matter in a gas stream delivered to a turbomachine (10) is monitored by positioning a light source upstream of the rotating stages (16) of the turbomachine (10) for transmitting a beam of light normal to the flow path of the gas stream through the turbomachine (10). The intensity of the coherent beam of light transmitted through the gas stream varies in accordance with the density of the particulate matter in the gas stream. A sensor (36) receives the varied intensity coherent beam of light for monitoring the density of the particulate matter entrained in the gas stream.

./...

EP 0 029 537 A1

-1-

## Method and Apparatus for Monitoring the Density of
## Particulate Matter Entrained in a Gas Stream

This invention relates to apparatus and a method for monitoring the density of particulate matter entrained in a gas stream delivered to a turbomachine as the motivating fluid therefor.

The use of turbomachines, such as gas expanders, to recover energy from waste heat gases generated within processes of various types has grown in importance in recent years due to the shortage and increased cost of conventional fossil fuels. For example, in the petroleum industry wherein the fluidic catalytic cracking process is employed quite extensively, the waste gas generated in the regenerator of the process may be used as a motivating fluid for the turbomachine. Similarly, a turbomachine may be employed to extract energy from waste gases generated within various proposed coal gasification processes.

The waste gases generated in the various processes often have entrained therein quantities of particulate matter, such as the catalyst used in the fluid catalytic cracking process. The entrained particulate matter impinges upon the rotating elements such as the blades and discs of the turbomachine to erode the same. Separators are employed upstream of the turbomachine to remove as much of the particulate matter as possible. However, it is impossible to remove all the particulate matter and wear of the blades will occur on a continuing basis.

At certain times, for example, due to overloading of the separator or excessive carryover of catalysts, the concentration of the particulate matter in the gas stream will significantly increase. Continued operation of the turbomachine under such operating conditions results in a significant increase in the rate of erosion of the blades and in fact, in severe circumstances, may result in almost total destruction of the blades of the turbomachine.

Heretofore, sampling techniques have been employed to determine the concentration of the particulate matter entrained in the gas stream. However, these sampling techniques have not proven entirely satisfactory as such techniques have not given a true indication of the actual concentration of the particulate matter within the gas stream at a given time. Such sampling techniques have generally employed apparatus for removing portions of the particulate matter entrained in the gas stream and delivering the same to a testing area. Sensing devices at such remote areas have sampled the removed particulate matter in an attempt to determine the actual concentration of the particulate matter in the gas stream. Such remote sampling techniques have, in some instances, employed lasers or similar concentrated light sources in the sampling arrangement. To prevent excessive wear of the rotating elements of the turbomachine, the actual concentration of particulate matter in the gas stream delivered to the turbomachine should be monitored on a continuous ongoing basis. The monitoring instruments should be placed upstream of the turbomachine to check the actual quality of the gas stream. The turbomachine may be quickly stopped should the concentration of the particulate matter in the gas stream exceed safe operating levels.

In accordance with the teachings of the present invention, these and other objectives may be attained with apparatus for monitoring entrainment of particulate matter in a gas stream delivered to a turbomachine including a light source positioned upstream of the rotating stages of a turbomachine for transmitting a beam of light normal to the flow path of the gas stream, the intensity of the coherent beam of light transmitted through the stream varies in inverse proportion to the density of the particulate matter in the gas stream. Sensor means receive the varied intensity coherent beam of light for monitoring the density of the particulate matter entrained in the gas stream.

The invention further includes a method of monitoring the density of particulate matter entrained in a gas stream supplied to a turbomachine as a motivating fluid therefor comprising the steps of transmitting a beam of light in a direction normal to the flow path of the gas stream to the turbomachine; and monitoring the intensity of the coherent light beam transmitted through the gas stream, with the intensity of the coherent beam of light varying with the density of the particulate matter entrained in the gas stream.

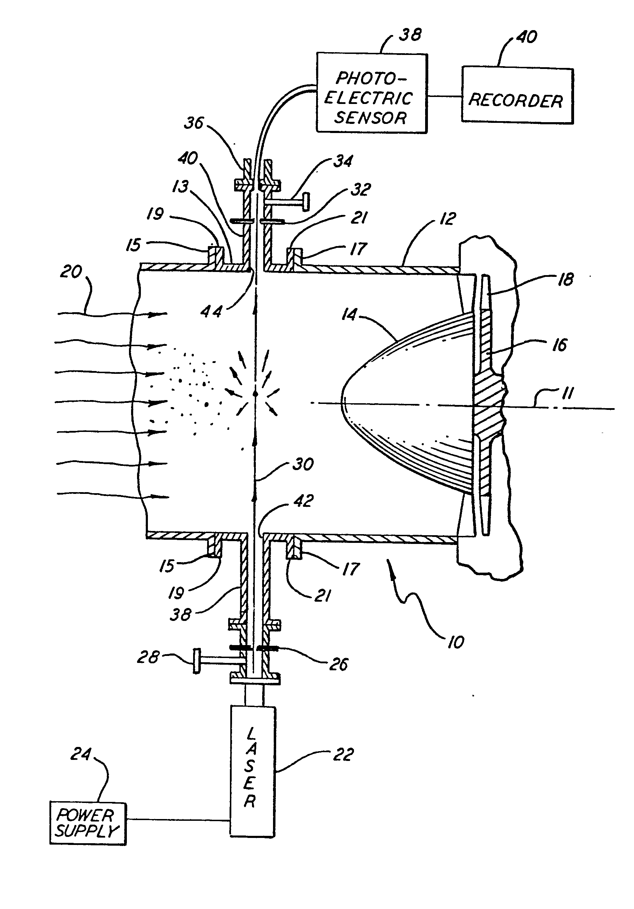

The present invention will now be described, by way of example, with reference to the accompanying drawing which shows a schematic, partially sectional view of a turbomachine illustrating teachings of the present invention.

Referring now to the drawing, there is disclosed a preferred embodiment of the present invention. In particular, turbomachine 10 is adapted to receive a waste heat gas stream generated in a process such as a fluidic catalytic cracking process or a coal gasification process, and to extract the energy contained within the waste gas for usable mechanical or electrical power. Arrows 20 indicate the path of flow of the gas stream to the turbomachine for use therein as a motivating fluid.

Turbomachine 10 includes a housing 12. A nose cone 14 is supported within housing 12 and operates to direct the gas stream against the rotor of the turbomachine for operation thereof. The rotor of the turbomachine includes a wheel 16 having blades 18 mounted thereon. Wheel 16 is suitably connected to a shaft 11 of the turbomachine.

Preferably, housing 12 has flanges 15 and 17 extending therefrom. Flanges 15 and 17 are provided for mating with flanges 19 and 21 of a removable housing portion 13. The function of removable housing portion 13 shall be explained more fully hereinafter.

As noted previously, the gas stream delivered to the turbomachine as a motivating fluid therefor has entrained therein particulate matter. The particulate matter will impinge upon the rotating elements, such as blades 18, of the turbomachine and erode same. If the concentration or density of the particulate matter within the gas stream becomes excessive at any particular time, the rotating elements of the turbomachine will excessively wear. Thus it is important that the concentration of the particulate matter within the gas stream be monitored on a continous basis to prevent continued operation of the turbomachine when the concentration of the particulate matter will cause extremely rapid erosion of the rotating elements of the turbomachine.

The present invention provides means for directly monitoring the concentration level of particulate matter in a gas stream on a continuous basis.

The invention includes a light source 22 positioned upstream of the rotating stages of the turbomachine for transmitting a beam of light represented by arrows 30 normal to the flow path of the gas stream through the turbomachine. Preferably, the light source is a laser having a power supply 24. A laser is preferably employed since it transmits a concentrated light beam.

Housing section 13 includes first and second elongated cylindrical members 38 and 40 disposed generally normal to the primary portion 15 of the housing section. Members 38 and 40 define orifices or apertures 42 and 44 in the surface of primary portion 15 of housing section 13. Light source or laser 22 transmits a beam of light through cylindrical member 38 and orifice 42 towards orifice 44.

The light beam received at orifice 44 passes into cylindrical member 40 for transmission to a sensor element 36. Sensor element 36 may include fiber optical sensing devices for further transmitting the beam of light to a photon sensitive device 38, such as a photoelectric or photovoltaic sensor. A recorder 40 is suitably connected to photon sensitive device 39 for recording a signal generated by device 38.

Cylindrical member 38 may include an orifice 26. A valve 28 may also be provided for transmitting a pressurized source of fluid, such as air, for pressurizing the chamber defined by member 38 to prevent particulate matter from entering into the chamber. Orifice 26 in combination with the fluid emitted via valve 28 maintains the desired pressure within the chamber defined by member 38.

Similarly, cylindrical member 40 may include an orifice 32 for concentrating the beam of light transmitted through orifice 44. A valve 34 controls the flow of a pressurized fluid, such as air, for preventing particulate matter from entering into the chamber defined by member 40 via aperture 44.

In operation the source of light 22 generates a continuous beam of light which is transmitted normal to the flow path of the gas stream through housing 12 towards the rotating elements or stages of the turbomachine. As the beam of light strikes the particulate matter laden gas stream the light will be dispersed according to the density or concentration of the particulate matter within the gas stream. That is to say, if the gas stream is relatively free of particulate matter then there will be only minimal scattering of the beam of light and a relatively strong coherent light beam will be transmitted through aperature 44. On the other hand, if the concentration of the particulate matter is relatively high, then the coherent beam of light transmitted through orifice 44 will be relatively weak. The dense concentration of the particulate matter will cause most of the light to be dispersed or prevented from passing directly through the gas stream towards aperture 44.

The beam of light transmitted through aperture 44 and cylindrical member 40 is further transmitted by fiber optic members 36 to the photon sensitive member 38. The photo sensitive device will generate a control signal, with the magnitude thereof directly varying with the intensity of the beam of light transmitted thereto. Thus, when a relatively weak beam of light is transmitted to photo sensitive device 38 the signal generated thereby will be relatively weak. Similary, when the beam of light transmitted to photo sensitive device 38 is relatively strong, then the signal generated thereby will be likewise of a relatively large magnitude. As noted previously, the intensity of the light beam varies with the concentration or density of the particulate matter entrained within the gas steam passing to the turbomachine. The signal generated by photo sensitive device 38 may be continuously monitored to determine changes in the concentration level of the particulate matter within the gas stream. Should the particulate matter concentration exceed safe operating levels, the turbomachine may be immediately shut down. Recorder 40 can record changes in the signal and thus changes in the concentration level of the particulate matter within the gas stream so that a continuous and permanent log of the operating conditions of the turbomachine may be maintained.

Fiber optic or suitable transmitting devices 36 have been provided since they are capable of withstanding the relatively high operating temperatures generated within the turbomachine by the gas stream to a greater degree than can photo sensitive devices such as photoelectric or photovoltaic sensors. Further, by placing photo sensitive devices 38 at a remote location from the turbomachine, as for example at a control operation console, operating personnel may readily monitor the density of the particulate matter along with other vital operating conditions of the turbomachine to prevent the machine from operating when conditions will cause damage to the machine. However, such photo sensitive devices may be installed to directly receive the beam of light transmitted from the light source resulting in the elimination of the fiber optic or other transmitting elements employed as a part of the sensor.

For ease of maintenance, section 13 mounting light source 22 and sensor means 36 has been made movable relative to the main body of housing 12. However, if desired housing section 13 may be formed integrally with the main housing body.

The present invention readily provides a means for continually monitoring the concentration of particulate matter in a gas stream on a direct basis by providing the monitoring means to directly check the concentration of the particulate matter directly within the turbomachine itself.

Although the sensor means have been provided at diametrically opposite ends of the housing from the light source it should be understood that the sensor means can be installed at the same side of the housing with the sensor thereby reacting to the back scatter of the light beam as generated upon contacting the particulate matter laden gas stream.

While a preferred embodiment of the present invention has been described and illustrated the invention should not be limited thereto but may be otherwise embodied within the scope of the following claims.

## Claims

1.  Apparatus for monitoring the density of particulate matter entrained in a gas stream delivered to a turbomachine (10) characterized by a light source (22) positioned upstream of the rotating stages (18) of the turbomachine (10) for transmitting a beam of light normal to the flow path of said gas stream through said turbomachine (10), with the intensity of the coherent beam of light transmitted through the gas stream being varied in accordance with the density of the particulate matter in the gas stream; and sensor means (36, 38) for receiving the varied intensity coherent beam of light for monitoring the density of the particulate matter entrained in the gas stream.

2.  Apparatus in accordance with claim 1 further characterized by said light source (22) is a laser.

3.  Apparatus in accordance with claims 1 or 2 further characterized by said sensor means includes a fiber optical sensor for transmitting the varied intensity coherent beam of light; and a photosensitive device (38) responsive to the intensity of the coherent beam of light for receiving the beam of light transmitted by the fiber optical sensor.

4.  Apparatus in accordance with claim 1 further characterized by means (38, 40) defining first and second openings (42, 44) formed at diametrically opposite ends in a housing (12) of the turbomachine (10) normal to the flow path of said gas stream through said turbomachine, said source of light being positioned to transmit said light beam through a first (42) of said openings and said sensor means (36) being positioned in a second (44) of said openings for receiving said transmitted light beam.

5.  A method for monitoring the density of particulate matter entrained in a gas stream supplied to a turbomachine (10) as a motivating fluid therefor characterized by the steps of transmitting a beam of light in a direction normal to the flow path of the gas stream to the turbomachine (10); and monitoring the intensity of the coherent light beam transmitted through the gas stream, with the intensity of the coherent beam of light varying with the density of the particulate matter entrained in the gas stream.

6. A method in accordance with claim 5 further characterized by the transmitting step includes the step of activating a laser as the source of the beam of light.

0029537

European Patent
Office

EUROPEAN SEARCH REPORT

Application number

EP 80 10 6872.7

| Category | Citation of document with indication, where appropriate, of relevant passages | Relevant to claim |
|---|---|---|
| | US - A - 4 137 462 (J.S. WYLER) <br> * abstract; column 1, lines 18 to 30 * <br> --- | 1-4 |
| | GB - A - 1 141 125 (ROLLS-ROYCE LTD.) <br> * claims 1 and 2 * <br> --- | 1 |
| A | DE - A1 - 2 745 483 (G. LAUER) <br> --- | |
| A | DE - A - 1 598 138 (R. BOSCH GMBH) <br> --- | |
| A | US - A - 3 867 640 (L.A. PAULSEN) <br> ---- | |

**DOCUMENTS CONSIDERED TO BE RELEVANT**

**CLASSIFICATION OF THE APPLICATION (Int. Cl.³)**

G 01 N 21/53
G 01 N 15/06

**TECHNICAL FIELDS SEARCHED (Int. Cl.³)**

G 01 N 15/06
G 01 N 21/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

X The present search report has been drawn up for all claims

| Place of search | Date of completion of the search | Examiner |
|---|---|---|
| Berlin | 04-03-1981 | SCHWARTZ |

EPO Form 1503.1 06.78